# EUROPÄISCHE PATENTSCHRIFT

(11) **EP 1 199 508 B1**
(45) Veröffentlichungstag und Bekanntmachung des Hinweises auf die Patenterteilung: **21.06.2006**
(21) Anmeldenummer: 01124782.2
(22) Anmeldetag: 17.10.2001
(51) Int. Cl.: F16M 11/10, F16M 11/04

(54) **Schwenkhalterungsanordnung**
Tilting supporting device
Dispositif de support inclinable

(30) Priorität: 19.10.2000 DE 10051892
(43) Veröffentlichungstag der Anmeldung: 24.04.2002
(73) Patentinhaber: Carl Zeiss Surgical GmbH, 73447 Oberkochen (DE)
(72) Erfinder: Abramowsky, Heinz, 89537 Giengen (DE); Grubauer, Gunter, 73450 Neresheim (DE); Wirth, Michael, 73434 Aalen (DE); Bröckel, Jörg, 89547 Gerstetten (DE); Brenner, Roland, 74599 Wallhausen (DE)
(74) Vertreter: Schorr, Frank Jürgen

(56) Entgegenhaltungen:
- FR-A- 2 353 760
- FR-A- 2 637 111
- US-A- 5 213 293
- US-A- 6 070 839
- US-A- 6 082 552
- PATENT ABSTRACTS OF JAPAN vol. 2000, no. 09, 13. Oktober 2000 (2000-10-13) -& JP 2000 172183 A (OKAMURA CORP), 23. Juni 2000 (2000-06-23)

## Beschreibung

Die Erfindung betrifft eine Schwenkhalterungsanordnung mit einem an einer Schwenkbasis um eine Horizontalachse schwenkbar angelenkten Schwenkarm zur höhenveränderbaren Halterung einer Last. Die Schwenkhalterungsanordnung ist insbesondere einsetzbar in Stativen zur Halterung von beispielsweise Lampen, Bildschirmen oder anderen Geräten, wie beispielsweise Operationsmikroskopen, welche höhenveränderbar bereitzustellen sind.

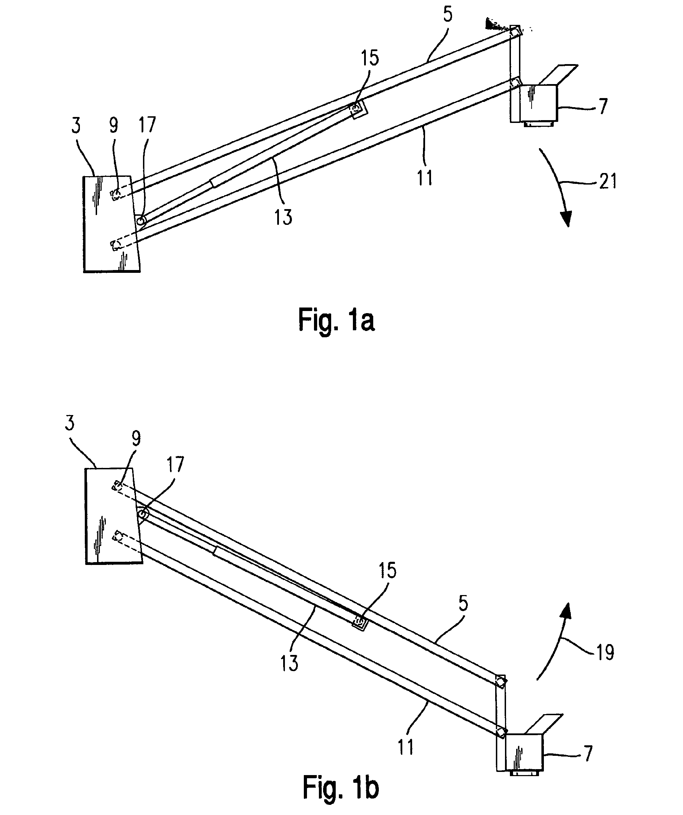

In den Figuren 1a und 1b ist eine herkömmliche Schwenkhalterungsanordnung mit einer Schwenkbasis 3 und einem Schwenkarm 5 zur höhenveränderbaren Halterung einer Last, hier beispielhaft ein Operationsmikroskop 7, in einer Stellung mit nach oben geschwenktem Schwenkarm (Figur 1a) bzw. einer Stellung mit nach unten geschwenktem Schwenkarm (Figur 1b) schematisch dargestellt. Der Schwenkarm 5 ist mit seinem einen Ende an der Schwenkbasis 3 um eine Horizontalachse 9 schwenkbar angelenkt und trägt an seinem anderen Ende das Operationsmikroskop 7.

Parallel zu dem Schwenkarm 5 ist ein Hilfsarm 11 derart angekoppelt, daß unabhängig von der Schwenkstellung des Schwenkarms 5 eine vertikale Ausrichtung des Operationsmikroskops 7 erhalten bleibt.

Die Gewichtskraft des Operationsmikroskops übt auf den Schwenkarm ein Drehmoment um die Schwenkachse 9 aus, welches mittels eines Kraftgeräts 13 in Form einer Gasdruckfeder weitgehend kompensiert ist, so daß bei Bereitstellung ausreichend großer Reibungskräfte in den Gelenken der Schwenkhalterungsanordnung der Schwenkarm in von einem Benutzer eingestellten Schwenkstellungen weitgehend verharrt. Hierzu ist die Gasfeder 13 mit ihrem einen Wirkende 15 an dem Schwenkarm 5 in einem von der Schwenkachse 9 entfernten Bereich angelenkt, und mit ihrem anderen Wirkende 17 ist die Gasdruckfeder 13 mit vertikalem Abstand von der Schwenkachse 9 an der Schwenkbasis 3 angelenkt. Die Druckkraft der Gasfeder erzeugt auf den Schwenkarm ein Gegendrehmoment zur Kompensation der Gewichtskraft der Last 7.

Im Hinblick auf eine schwenkstellungsunabhängige Kompensation der Gewichtskraft der Last hat sich jedoch herausgestellt, daß die Wirkung des Kraftgeräts 13 in einer unteren Schwenkstellung zu groß ist, so daß sich der Schwenkarm selbsttätig in eine durch einen Pfeil 19 in Figur 1b angedeutete Richtung nach oben bewegt, und daß die Wirkung des Kraftgeräts in einer oberen Schwenkstellung zu gering ist, so daß sich der Arm selbsttätig in eine in Figur 1a mit einem Pfeil 21 angedeutete Richtung nach unten bewegt. Um diese selbsttätige Bewegung zu verhindern, werden herkömmlicherweise die Reibungskräfte in den Gelenken erhöht, was allerdings die leichtgängige und präzise Einstellung einer gewünschten Schwenkstellung durch den Benutzer erschwert.

Im Hinblick auf eine Lösung dieses Problems ist aus EP 0 433 426 A1 eine Schwenkhalterungsanordnung bekannt, bei welcher das schwenkbasisseitige Wirkende des Kraftgeräts an der Schwenkbasis nicht an einem festen Ort angelenkt ist, sondern mit einem Zapfen in ein an der Schwenkbasis vorgesehenes und sich in Vertikalrichtung erstreckendes Langloch eingreift, so daß ein vertikaler Abstand zwischen einem Abstützpunkt des Kraftgeräts an der Schwenkbasis und der Horizontalachse änderbar ist. Das Langloch weist hierbei eine bestimmte kurvenförmige Erstreckung auf, so daß der vertikale Abstand zwischen Abstützort und Horizontalachse sich in Abhängigkeit von der Schwenkstellung des Schwenkarms automatisch ändern soll, um damit eine schwenkstellungsabhängige Anpassung des durch das Kraftgerät bereitgestellten Drehmoments zu erzielen. Hierbei hat sich allerdings herausgestellt, daß die Verlagerung des schwenkbasisseitigen Wirkendes des Kraftgeräts in dem Langloch in Abhängigkeit von der Schwenkstellung des Schwenkarms nicht ausreichend präzise erfolgt, so daß eine schwenkstellungsunabhängige Kompensation der Gewichtskraft der Last bei verringerten Reibungskräften nicht befriedigend möglich ist.

Das gattungsbildende Dokument US 5,213,293 offenbart eine Schwenkhalterungsanordnung gemäß des Oberbegriffes des unabhängigen Anspruches 1. Die vorbekannte Anordnung weist eine Schwenkbasis auf, in die ein bogenförmiger Schlitz eingebracht ist, innerhalb dessen das Kraftgerät zum Stützen des Schwenkarmes abgestützt ist. Dabei verlagert sich der Ort des Abstützens des Kraftgerätes in Abhängigkeit von einer aktuellen Einstellung des Schwenkarms der Halterung automatisch aufgrund der auf das Kraftgerät wirkenden Kraft.

Demgemäß ist es eine Aufgabe der vorliegenden Erfindung, eine Schwenkhalterungsanordnung bereitzustellen, welche einfacher einstellbar ist.

Ferner ist es eine Aufgabe der vorliegenden Erfindung, eine Schwenkhalterungsanordnung der vorangehend geschilderten Art bereitzustellen, welche eine weitgehend schwenkstellungsunabhängige Kompensation der Gewichtskraft der zu halternden Last ermöglicht.

Die vorstehende Aufgabe wird bei einer Schwenkhalterungsanordnung mit den Merkmalen des Oberbegriffes des unabhängigen Anspruch 1 durch die Merkmale des kennzeichnenden Teils des unabhängigen Anspruch 1 gelöst.

Die Erfindung geht dabei aus von einer Schwenkhalterungsanordnung mit einem an einer Schwenkbasis um eine Horizontalachse schwenkbar angelenkten Schwenkarm zur höhenveränderbaren Halterung einer Last. Um zur wenigstens teilweisen Kompensation des durch die Last auf den Schwenkarm ausgeübten Drehmoments ein Gegendrehmoment bereitzustellen, ist ein Kraftgerät, wie beispielsweise eine Schraubendruckfeder oder eine Gasdruckfeder vorgesehen, welches mit seinem einen Wirkende mit Abstand von der Horizontalachse an dem Schwenkarm angelenkt ist und welches mit seinem anderen Wirkende mit Abstand in Vertikalrichtung von der Horizontalachse an der Schwenkbasis abgestützt ist. Hierbei ist ein Abstützort des schwenkbasisseitigen Wirkendes der Kraftgeräts an der Schwenkbasis höhenveränderbar ausgestaltet, indem an der Schwenkbasis eine quer zur Horizontalrichtung sich erstreckende Stützfläche vorgesehen ist, entlang der der Abstützort des Kraftgeräts verlagerbar ist. Die Stützfläche ist hierbei derart orientiert, daß bei nach oben geschwenktem Schwenkarm der Abstützort nach unten gedrückt wird und bei nach unten geschwenktem Schwenkarm der Abstützort nach oben gedrückt wird, um das Gegendrehmoment schwenkstellungsabhängig derart einzustellen, daß selbsttätige Bewegungen des Schwenkarms in seiner oberen oder unteren Stellung unterdrückt werden.

Erfindungsgemäß ist ein zweites Kraftgerät vorgesehen, um einer Verlagerung des Abstützorts nach unten oder/und nach oben in wenigstens einem Teilbereich der Stützfläche eine Gegenkraft entgegen zu setzen.

Diese durch das zweite Kraftgerät bereitgestellte Gegenkraft erlaubt wenigstens in dem Teilbereich der Stützfläche eine in Abhängigkeit von der Schwenkstellung kontinuierliche und wohldefinierte Verlagerung des Abstützorts entlang der Stützfläche und damit eine von der Schwenkstellung des Schwenkarms weitgehend unabhängige, also weitgehend fehlerfreie Kompensation der Gewichtskraft der zu halternden Last.

Vorzugsweise ist das zweite Kraftgerät ein doppelt wirkendes Kraftgerät, welches derart ausgebildet ist, daß es versucht, den Abstützort in einem Zentrum eines an der Stützfläche vorgesehenen Verlagerungsbereichs für den Abstützort zu halten, wobei das zweite Kraftgerät weiter bevorzugt mit zunehmender Auslenkung des Abstützorts aus dem Zentrum eine ebenfalls zunehmende Gegenkraft bereitstellt. Das zweite Kraftgerät kann hierzu eine Federanordnung mit vorzugsweise wenigstens einer Druckfeder oder einer Zugfeder umfassen.

Bevorzugterweise ist die Schwenkhalterungsanordnung derart ausgestaltet, daß sie unterschiedlich große Lasten kompensieren kann. Hierzu ist ein Antrieb vorgesehen, der den Verlagerungsbereich, in dem der Abstützort entlang der Stützfläche verlagerbar ist, selbst in Vertikalrichtung bezüglich der Horizontalachse verlagert. Ist der Verlagerungsbereich selbst in Vertikalrichtung mit vergleichsweise größerem Abstand unterhalb der Horizontalachse angeordnet, kann die Schwenkhalterungsanordnung größere Lasten kompensieren als dann, wenn der Verlagerungsbereich näher an der Horizontalachse angeordnet ist.

Bei einem vorgegebenen Bereich, in dem das Gegendrehmoment bzw. die zu kompensierende Last einstellbar sind, sind die durch das erste und das zweite Kraftgerät bereitgestellten Kräfte vorzugsweise derart aufeinander abgestimmt, daß die maximale Gegenkraft des zweiten Kraftgeräts größer ist als die Auslenkkraft, die auf das schwenkbasisseitige Wirkende des Kraftgeräts aufgrund der Neigung der Stützfläche wirkt, um den Abstützort entlang der Stützfläche zu verlagern. Hierdurch ist der aktuelle Abstützort durch ein Federkraftgleichgewicht wohldefiniert, was zu einer besonders weitgehend schwenkstellungsunabhängigen Kompensation der Gewichtskraft der Last führt. Vorzugsweise ist diese Kräfteabstimmung zumindest für einen Teilbereich des Verlagerungsbereichs und stärker bevorzugt für den gesamten Verlagerungsbereich erfüllt. Ferner ist diese Kräfteabstimmung zumindest für kleine einstellbare Gegendrehmomente und bevorzugterweise für sämtliche einstellbaren Gegendrehmomente erfüllt.

Vorzugsweise ist ferner ein Paar von Endanschlägen für eine Komponente des schwenkbasisseitigen Wirkendes des Kraftgeräts vorgesehen, um den Verlagerungsbereich als Teilbereich der Stützfläche zu begrenzen. Weiter bevorzugt ist hierbei, daß das Paar von Endanschlägen durch den Antrieb in Vertikalrichtung verlagerbar ist. Die Komponente des schwenkbasisseitigen Endes des Kraftgeräts kommt dabei vorzugsweise dann in Anlage an einen der Endanschläge, wenn die Gegenkraft des zweiten Kraftgeräts nicht ausreicht, um die aufgrund der Neigung der Stützfläche verursachte Auslenkkraft zu kompensieren.

Vorzugsweise sind der Antrieb zur Verlagerung des Verlagerungsbereichs und das zweite Kraftgerät funktionell in Reihe geschaltet. Hierbei wiederum ist es bevorzugt, daß der Antrieb mit einem seiner beiden Wirkenden in Antriebsrichtung fest an das an der Schwenkbasis abgestützte Ende des ersten Kraftgeräts gekoppelt ist und mit seinem anderen Wirkende unter Zwischenschaltung des zweiten Kraftgeräts an der Schwenkbasis angelenkt ist. Alternativ hierzu ist bevorzugt, daß der Antrieb mit einem seiner beiden Wirkenden an der Schwenkbasis angelenkt ist und mit seinem anderen Wirkende unter Zwischenschaltung des zweiten Kraftgeräts an das an der Schwenkbasis abgestützte Ende des ersten Kraftgeräts gekoppelt ist.

Eine bevorzugt einfache Ausgestaltung der Endanschläge ergibt sich, indem wenigstens einer der beiden Endanschläge durch eine Druckfeder des zweiten Kraftgeräts bereitgestellt ist, welche den Endanschlag dann bereitstellt, wenn sie komplett komprimiert ist.

Ferner ist es bevorzugt, daß der Antrieb ein Spindelantrieb ist, dessen Spindel Schraubenfedern des zweiten Kraftgeräts in deren Längsrichtung durchsetzen.

Eine weitere bevorzugte Ausgestaltung der Schwenkhalterungsanordnung sieht vor, daß die Stützfläche an einem Schlitten bereitgestellt ist, welcher durch den Antrieb bezüglich der Horizontalachse in Vertikalrichtung verlagerbar ist.

Im Hinblick auf die geometrische Gestaltung der Stützfläche sind Formen bevorzugt, bei denen eine auf der Stützfläche errichtete Normale schräg nach oben orientiert ist.

Die Erfindung wird nachfolgend anhand von Ausführungsbeispielen näher erläutert. Hierbei zeigt:
- Figur 1: eine herkömmliche Schwenkhalterungsanordnung,
- Figur 2: eine Teilansicht einer ersten Ausführungsform einer erfindungsgemäßen Schwenkhalterungsanordnung in mehreren Schwenkstellungen bei einer Einstellung zur Halterung einer kleinen Last,
- Figur 3: eine Teilansicht der in Figur 2 gezeigten Ausführungsform in mehreren Schwenkstellungen bei einer Einstellung zur Halterung einer großen Last,
- Figur 4: eine teilweise Darstellung einer zweiten Ausführungsform der erfindungsgemäßen Schwenkhalterungsanordnung,
- Figur 5: eine teilweise Darstellung einer dritten Ausführungsform der erfindungsgemäßen Schwenkhalterungsanordnung,
- Figur 6: eine teilweise Darstellung einer vierten Ausführungsform der erfindungsgemäßen Schwenkhalterungsanordnung,
- Figur 7: eine teilweise Darstellung einer fünften Ausführungsform der erfindungsgemäßen Schwenkhalterungsanordnung,
- Figur 8: eine ergänzende Darstellung zu der in den Figuren 2 und 3 dargestellten Ausführungsform, und
- Figur 9: eine Variante zu einem in den Figuren 2 und 3 dargestellten Kraftgeräts.

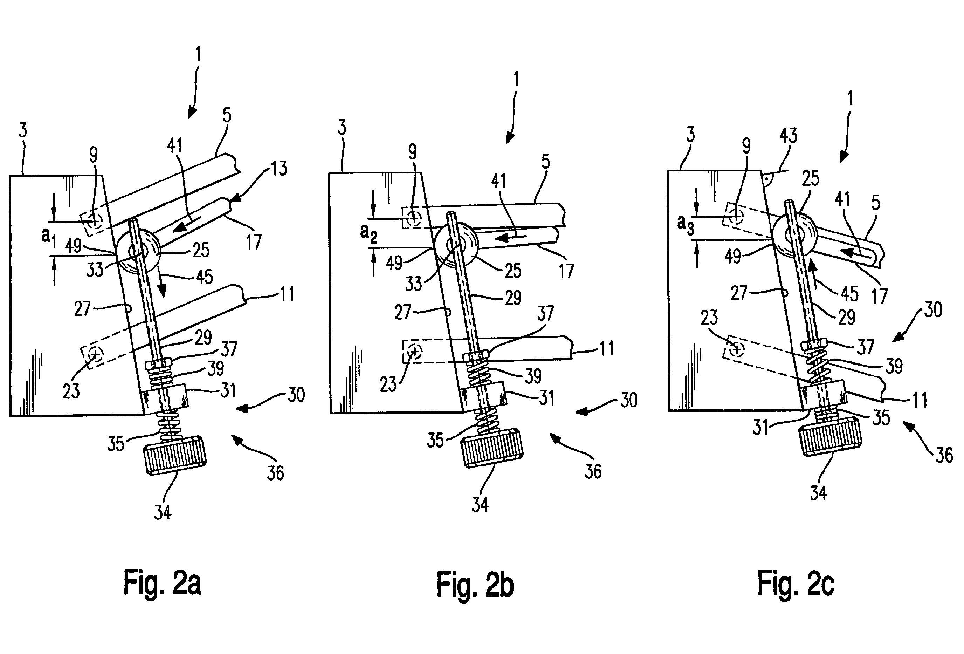

In den Figuren 2a, 2b und 2c ist eine erste Ausführungsform der erfindungsgemäßen Schwenkhalterungsanordnung 1 jeweils in einer Teilansicht dargestellt. Die Schwenkhalterungsanordnung 1 ist von ihrem grundsätzlichen Aufbau her der im Zusammenhang mit den Figuren 1a und 1b erläuterten herkömmlichen Schwenkhalterungsanordnung ähnlich und umfaßt eine Schwenkbasis 3 und einen Schwenkarm 5, welcher um eine horizontal orientierte Achse 9 schwenkbar an der Schwenkbasis angelenkt ist. In den Figuren 2a bis 2c ist jeweils der der Schwenkbasis 3 nahe Bereich der Schwenkhalterungsanordnung 1 als Teilansicht dargestellt, während ein von der Schwenkbasis 3 entfernter Bereich des Schwenkarms 5 mit einer daran gehalterten Last der Einfachheit halber nicht dargestellt ist. Im Hinblick auf die Anbringung der Last an einem von der Schwenkbasis entfernten Bereich des Schwenkarms 5 kann jedoch unmittelbar auf die Figuren 1a und 1b Bezug genommen werden, da dies bei dieser hier erläuterten ersten Ausführungsform ähnlich erfolgt. Für eine von der Schwenkstellung des Schwenkarms 5 unabhängige vertikale Orientierung der Last sorgt ebenfalls ein sich parallel zu dem Schwenkarm 5 erstreckender Hilfsarm 11, welcher mit Abstand von der Horizontalachse 9 an der Schwenkbasis 3 um eine weitere Schwenkachse 23 drehbar angelenkt ist. Ebenso wie bei der in Figur 1 dargestellten Schwenkhalterungsanordnung ist als ein erstes Kraftgerät eine Gasdruckfeder 13 vorgesehen, welche mit ihrem einen Wirkende mit Abstand von der Horizontalachse 9 an den Schwenkarm 5 angelenkt ist und welche mit ihrem anderen Wirkende 17 eine Druckkraft auf die Schwenkbasis 3 ausübt.

Im Unterschied zu der in Figur 1 dargestellten herkömmlichen Schwenkhalterungsanordnung ist bei der erfindungsgemäßen Schwenkhalterungsanordnung 1 allerdings das schwenkbasisseitige Wirkende 17 der Gasdruckfeder 13 nicht fest an der Schwenkbasis 3 angelenkt, sondern bezüglich der Schwenkbasis in Vertikalrichtung verlagerbar. Hierzu ist an dem schwenkbasisseitigen Wirkende 17 der Gasdruckfeder 13 eine Rolle 25 um eine Horizontalachse drehbar gelagert, welche auf einer an der Schwenkbasis 3 vorgesehenen Stützfläche 27 abrollen kann.

Damit ist ein Kontaktpunkt 49 zwischen der Rolle 25 und der Stützfläche 27, also der Ort, an dem sich das schwenkbasisseitige Ende 17 der Druckfeder 13 an der Stützfläche 27 abstützt, entlang der Stützfläche 27 verlagerbar, so daß ein Abstand a in Vertikalrichtung zwischen der Schwenkachse 9 des Schwenkarms 5 und dem Abstützort 49 ebenfalls änderbar ist.

In Figur 2a ist der Schwenkarm 5 in einer schräg nach oben gerichteten Schwenkstellung angeordnet, in Figur 2b ist der Schwenkarm in einer in etwa horizontalen Schwenkstellung angeordnet, und in Figur 2C ist der Schwenkarm 5 in einer nach schräg unten gerichteten Schwenkstellung angeordnet. In Abhängig von der Schwenkstellung ändert sich der Abstand a zwischen der Horizontalachse 9 und dem Abstützort der Rolle 25 an der Stützfläche 27 derart, daß sich dieser Abstand a beim Durchlaufen von Schwenkstellungen des Schwenkarms 5 von oben nach unten kontinuierlich verringert. Damit ist der Abstand a1 in Figur 2a größer als der Abstand a2 in Figur 2b, und dieser wiederum ist größer als der Abstand a3 in Figur 2c. Da das auf den Schwenkarm 5 durch die Gasdruckfeder 13 ausgeübte Gegendrehmoment von dem Abstand a zwischen der Horizontalachse 9 und dem Abstützpunkt abhängt, folgt, daß das Gegendrehmoment in einer Schwenkstellung mit nach oben gerichtetem Schwenkarm 5 größer ist als in einer Schwenkstellung mit nach unten gerichtetem Schwenkarm 5. Hierdurch wird eine selbsttätige Bewegung des Schwenkarms nach unten in einer oberen Stellung des Schwenkarms vermindert (vgl. Pfeil 21 in Figur 1a), wie auch ebenfalls eine selbsttätige Bewegung des Schwenkarms nach oben in seiner nach unten gerichteten Schwenkstellung vermieden wird (vgl. Pfeil 19 in Figur 1b).

Ein genaueres Verständnis für die Verlagerung des Abstützorts in Abhängigkeit von der Schwenkstellung ergibt sich aus der nachfolgenden Beschreibung.

Die Schwenkhalterungsanordnung 1 umfaßt ferner einen Antrieb 30, um den Bereich einzustellen, in dem der Abstützort 49 entlang der Stützfläche 27 verlagerbar ist. Der Antrieb 30 umfaßt eine durch einen Drehgriff 34 betätigbare Gewindespindel 29, welche eine an der Schwenkbasis 3 festgelegte Führungsbuchse 31 durchsetzt und dabei in einer Vertikalebene und im wesentlichen parallel zur Stützfläche 27 orientiert ist. In der Führungsbuchse 31 ist die Gewindespindel 21 in deren Längsrichtung verschiebbar geführt. Die Gewindespindel 29 ist in einer an dem schwenkbasisseitigen Wirkende 17 der Gasdruckfeder 13 vorgesehene Gewindebohrung 33 eingeschraubt, so daß eine Auslenkkraft zur Verlagerung des Abstützorts 49 entlang der Stützfläche 27 ebenfalls zu einer Verschiebung der Gewindespindel 29 in deren Längsrichtung bezüglich der Führungsbuchse 31 führt.

Die Gewindespindel 29 ist allerdings bezüglich der Schwenkbasis 3 nicht frei verschiebbar. Es ist vielmehr ein zweites Kraftgerät in Form einer Federanordnung 36 vorgesehen, um die Verschiebung der Gewindespindel 29 zu steuern.

Hierzu ist zwischen dem Drehgriff 34 und der Führungsbuchse 31 eine Schraubenfeder 35 angeordnet, welche die Gewindespindel 29 in deren Längsrichtung durchsetzt. Ferner ist zwischen der Führungsbuchse 31 und der Gewindebohrung 33 an der Gewindespindel 29 ein Stützring 37 festgelegt, und zwischen dem Stützring 37 und der Führungsbuchse 31 ist eine weitere Schraubenfeder 39 angeordnet, welche von der Gewindespindel 29 ebenfalls zentral durchsetzt wird. Wirken auf die Gewindespindel 29 keinen weiteren Kräfte, so versuchen die beiden Schraubenfedern 35 und 39 die Gewindespindel 29 in eine Mittelstellung zu verlagern, wie sie in Figur 2b dargestellt ist und in welcher die beiden Schraubenfedern 39 und 35 einen in etwa gleichen Kompressionszustand aufweisen.

Da sich eine Erstreckungsrichtung einer Verbindungslinie zwischen dem schwenkbasisseitigen Wirkende 17 der Druckfeder 13 und dem an dem Schwenkarm 5 festgelegten Wirkende der Druckfeder 13 beim Verschwenken des Schwenkarms 5 zusammen mit der Erstreckungsrichtung des Schwenkarms 5 verlagert, erzeugt eine durch einen Pfeil 41 gekennzeichnete Druckkraft der Druckfeder 13 in Zusammenwirkung mit der Orientierung der Stützfläche 27 (eine Normale 43 auf die Stützfläche 27 ist schräg nach oben gerichtet, vgl. Figur 2c) auf das schwenkbasisseitige Wirkende 17 der Druckfeder 13 eine Auslenkkraft 45 parallel zu der Stützfläche 27, welche bei nach oben geschwenktem Schwenkarm 5 nach unten gerichtet ist (vgl. Figur 2a) und welche bei nach unten geschwenktem Schwenkarm 5 nach oben gerichtet ist (vgl. Figur 2c). Da das schwenkbasisseitige Wirkende 17 der Druckfeder 13 über die Rolle 25 im wesentlichen reibungslos an der Stützfläche 27 abrollt, überträgt sich die Auslenkkraft 45 im wesentlichen vollständig auf die Schraubspindel 29 und versucht diese bezüglich der Führungsbuchse 31 zu verlagern. Bei nach unten gerichteter Auslenkkraft 45 führt dies zu einer Kompression der oberen Schraubenfeder 39 derart, daß diese eine die Auslenkkraft 45 kompensierende Gegenkraft bereitstellt und ein Kräftegleichgewicht entsteht (Figur 2a). Umgekehrt führt eine nach oben gerichtete Auslenkkraft 45 (vgl. Figur 2c) zu einer Verlagerung der Gewindespindel 29 derart, daß die untere Schraubenfeder 35 soweit komprimiert ist, daß diese eine der Auslenkkraft 45 entgegengerichtete Gegenkraft bereitstellt und ebenfalls ein Kräftegleichgewicht entsteht. Bei der in Figur 2b dargestellten horizontalen Schwenkstellung des Schwenkarms 5 wirkt die Druckkraft 41 der Druckfeder 13 im wesentlichen senkrecht auf die Stützfläche 27, so daß im wesentlichen keine Auslenkkraft in Richtung der Gewindespindel 29 bzw. parallel zur Stützfläche 27 ausgeübt wird und die beiden Schraubenfedern 34 und 39 die Gewindespindel 29 in der in Figur 2b dargestellten Mittelstellung mit im wesentlichen gleichem Kompressionszustand der Federn 35 und 39 halten.

Das vorangehend beschriebene Zusammenspiel der durch die Druckkraft 41 ausgeübten Auslenkkraft 45 mit den Gegenkräften der Schraubenfedern 35 und 39 führt zu einer von der Schwenkstellung des Schwenkarms 5 abhängigen Einstellung des Abstands a zwischen der Schwenkachse 9 und dem Abstützpunkt 49 des schwenkbasisseitigen Wirkendes 17 der Druckfeder 13 an der Stützfläche 27 und damit zu der gewünschten Unabhängigkeit des Gegendrehmoments von der Schwenkstellung. Hierdurch ist eine schwenkstellungsunabhängige Kompensation der Gewichtskraft der an der Schwenkhalterungsanordnung 1 angebrachten Last möglich, so daß der Benutzer die Last durch Verschwenken des Schwenkarms in beliebigen Höhen anordnen kann, ohne daß sich der Schwenkarm selbsttätig in Bewegung setzt, und zwar auch dann, wenn Gelenke der Schwenkhalterungsanordnung eine vergleichsweise geringe Reibung gegenüber Verschwenkung bereitstellen.

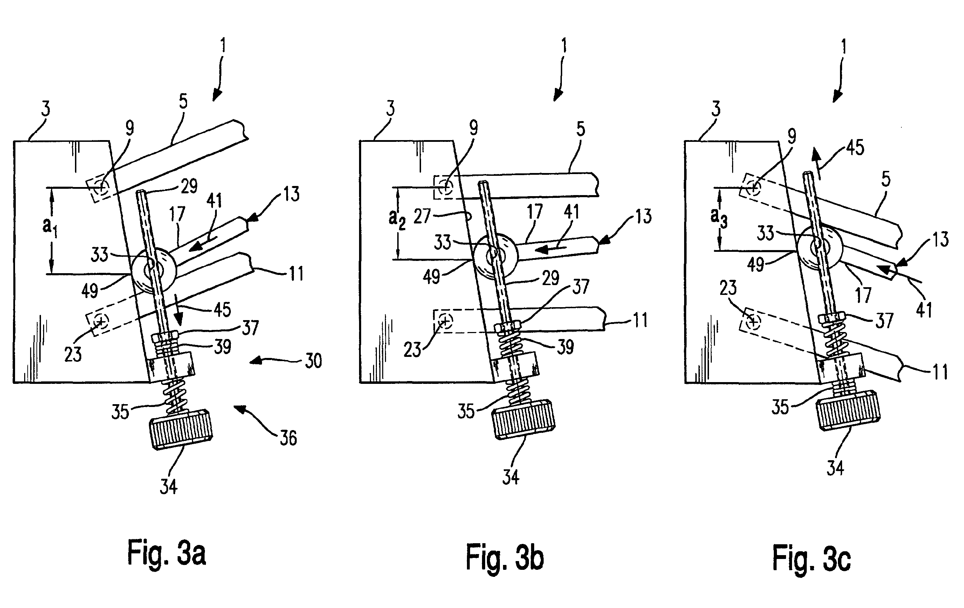

In den Figuren 2a, 2b, 2c ist die Schraubspindel 29 lediglich so weit in die Gewindebohrung 33 eingeschraubt, daß der Abstand a zwischen der Horizontalachse 9 und dem Abstützpunkt 49 verhältnismäßig kleine Werte aufweist. Entsprechend ist das durch die Druckfeder 13 erzeugte Gegendrehmoment vergleichsweise klein, und die Schwenkhalterungsanordnung 1 ist damit zur Kompensation von Gewichtskräften vergleichsweise leichter Lasten eingestellt. Die Schwenkhalterungsanordnung 1 ist durch Betätigen des Antriebs 30 allerdings auch zur Kompensation schwererer Lasten einstellbar, wie dies in den Figuren 3a, 3b und 3c wiederum für verschiedene Schwenkstellungen dargestellt ist. Hierzu ist die Schraubspindel 29 weiter in die Gewindebohrung 33 an dem schwenkbasisseitigen Ende der Druckfeder 13 eingeschraubt, so daß der Abstand a zwischen der Horizontalachse 9 und dem Abstützpunkt 49 im Vergleich zu den Figuren 2a, 2b, 2c vergrößert ist. Entsprechend ist auch das von der Schwenkhalterungsanordnung erzeugte Gegendrehmoment vergrößert, und die Anordnung 1 ist somit zum Tragen schwererer Lasten eingestellt. Auch hierbei ändert sich der Abstand a in Abhängigkeit von der Schwenkstellung des Schwenkarms 5, so daß bei nach oben geschwenktem Schwenkarm 5 dieser Abstand (vgl. Abstand a1 in Figur 3a) größer ist als bei horizontal gestelltem Schwenkarm 5 (vgl. Abstand a2 in Figur 3b) und dieser wiederum größer ist als bei nach unten geschwenktem Schwenkarm 5 (vgl. Abstand a3 in Figur 3c).

Auch bei der Einstellung für schwerere Lasten ist es wiederum so, daß bei in etwa horizontal orientiertem Schwenkarm 5 die Druckkraft 41 der Druckfeder 13 im wesentlichen keine Auslenkkraft parallel zur Stützfläche 27 auf das schwenkbasisseitige Ende 17 der Druckfeder 13 ausübt, so daß die beiden Schraubenfedern 35 und 39 die Gewindestange 29 in einer Mittelstellung halten. Wird der Schwenkarm 5 ausgehend von der in Figur 3b gezeigten in etwa horizontalen Stellung kontinuierlich nach oben bewegt, so wird die obere Schraubenfeder 39 zunehmend komprimiert und der Abstand a zwischen Horizontalachse 9 und Abstützpunkt 49 ebenfalls kontinuierlich vergrößert, um das Gegendrehmoment zu erhöhen.

Bei nach oben geschwenktem Schwenkarm 5 führt allerdings, wie aus Figur 3a ersichtlich, die im Vergleich zu Figur 2a erhöhte Neigung der Erstreckungsrichtung der Druckfeder 13 bezüglich der Stützfläche 27 zu einer im Vergleich zur Figur 2a vergrößerten Auslenkkraft 45 nach unten. Aufgrund dieser vergleichsweise erhöhten Auslenkkraft 45 ergibt sich eine bestimmte Schwenkstellung des Schwenkarms nach oben, wie sie in Figur 3A dargestellt ist, in der die Auslenkkraft 45 die durch die Schraubenfeder 39 bereitgestellte maximale Gegenkraft übersteigt und die Schraubenfeder 39 somit vollkommen komprimiert ist. Damit stellt die Schraubenfeder 39 einen Endanschlag für die Auslenkung des Abstützorts 49 nach unten bereit. Entsprechend ist bei dieser Einstellung auch bei nach unten orientiertem Schwenkarm 5 die nach oben gerichtete Auslenkkraft 45 im Vergleich zu der Figur 2c erhöht, so daß hier eine Schwenkstellung des Arms 5 nach unten besteht, ab der dann die untere Schraubenfeder 35 vollkommen komprimiert ist und diese entsprechend einen Endanschlag für die Verlagerung des Abstützpunkts 49 nach oben bereitstellt.

Im folgenden werden Varianten der im Zusammenhang mit den Figuren 2 und 3 dargestellten Ausführungsform der Schwenkhalterungsanordnung erläutert. Hinsichtlich ihres Aufbaus und ihrer Funktion einander entsprechende Komponenten sind mit den für die Figuren 2 und 3 verwendeten Bezugsziffern bezeichnet, zur Unterscheidung jedoch mit einem zusätzlichen Buchstaben versehen. Zur Erläuterung wird jeweils auf die gesamte vorangehende Beschreibung Bezug genommen.

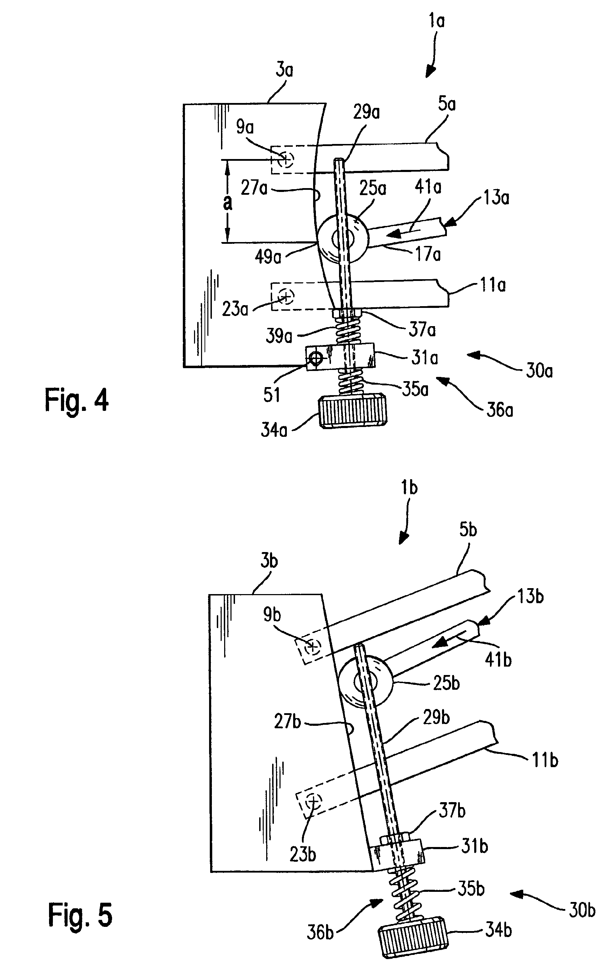

Eine in Figur 4 in Teilansicht dargestellte Schwenkhalterungsanordnung 1a weist im wesentlichen den gleichen Aufbau auf, wie die in den Figuren 2 und 3 dargestellte Schwenkhalterungsanordnung. Im Unterschied hierzu erstreckt sich jedoch eine an einer Schwenkbasis 3a vorgesehene Stützfläche 27a zur Abstützung einer Druckfeder 13a an der Schwenkbasis 3a nicht geradlinig. Vielmehr weist die Stützfläche 27a der Figur 4 einen konkav gekrümmten Verlauf auf. Hierdurch ist eine durch die Druckkraft 41a der Druckfeder 13 erzeugte Auslenkkraft auf das schwenkbasisseitige Ende 17a der Druckfeder 13 in Richtung der Stützfläche 27a nicht lediglich von der Orientierung der Erstreckungsrichtung der Druckfeder 13a bezüglich der Schwenkbasis 3a abhängig, sondern ebenfalls von dem Abstützort 49a, der sich aufgrund des Kräftegleichgewichts zwischen Auslenkkraft und einer durch Schraubenfedern 39a und 35a erzeugten Gegenkraft einstellt, da die Orientierung der Stützfläche 27a ebenfalls von dem Abstützort 49a abhängig ist. Durch eine geeignete Gestaltung der gekrümmten Stützfläche 27a läßt sich somit eine noch feinere Abstimmung des Abstands a zwischen einer Schwenkachse 9a des Schwenkarms 5a und dem Abstützort 49a im Hinblick auf schwenkstellungsunabhängige Kompensation der Gewichtskraft der zu halternden Last erreichen.

Im Unterschied zu der Schwenkhalterungsanordnung der Figuren 2 und 3 ist bei der Schwenkhalterungsanordnung 1a der Figur 4 eine Führungsbuchse 31a für eine Schraubspindel 29a eines Antriebs 30a nicht an der Schwenkbasis 3a festgelegt, sondern über ein Kippgelenk 51 schwenkbar an dieser angelenkt, so daß die an die Schraubspindel 29a gekoppelte Rolle 25a entlang der Stützfläche 27a verspannungsfrei in eine das beschriebene Kräftegleichgewicht herstellende Stellung rollen kann.

Eine in Figur 5 dargestellte Schwenkhalterungsanordnung 1b weist ebenfalls einen ähnlichen Aufbau auf wie die in den Figuren 2 und 3 dargestellte Schwenkhalterungsanordnung. Im Unterschied hierzu sind jedoch nicht beidseits einer Führungsbuchse 31b für eine Gewindespindel 29b Schraubenfedern zur Bereitstellung einer Gegenkraft zur Druckkraft 41b einer Druckfeder 13b vorgesehen. Das zweite Kraftgerät 36b umfaßt hier lediglich eine einzige Schraubenfeder 35b, welche zwischen der Führungsbuchse 31b und einem Drehgriff 34b am Ende der Schraubspindel 29b vorgesehen ist. Zwischen der Führungsbuchse 31b und einer Rolle 25b am schwenkbasisseitigen Wirkende der Druckfeder 13b ist wiederum ein Stützring 37b festgelegt, welcher einen Endanschlag für die Verlagerung der Schraubspindel 29b nach unten bildet. Lediglich gegenüber einer Verlagerung der Schraubspindel 29b nach oben stellt dann das zweite Kraftgerät 36b durch die Schraubenfeder 35b eine Gegenkraft bereit, wenn diese durch Verschwenken des Schwenkarms 5b nach unten zunehmend komprimiert wird.

Bei entsprechender Abstimmung der Druckkraft 41b der Druckfeder 13b, der Neigung der Stützfläche 27b und der Federkraft der Schraubfeder 35b aufeinander, ist die Bereitstellung lediglich einer Schraubenfeder für das zweite Kraftgerät 36b ausreichend, um bereits eine ausreichend genaue Kompensation des durch die Last ausgeübten Drehmoments unabhängig von der Schwenkstellung des Schwenkarms 5b zu erreichen.

In den Figuren 2 und 3 (und auch in den Figuren 4 und 5) bildet die Schraubspindel 29 zusammen mit der Gewindebohrung 33 und dem Drehgriff 34 den Antrieb 30, um den Bereich, in dem der Abstützort 49 entlang der Stützfläche 27 verlagerbar ist, zu ändern. Ferner bilden die Schraubenfedern 35 und 39, welche zwischen dem Stützring 37 und der Führungsbuchse 31 bzw. der Führungsbuchse und dem Drehgriff 34 angeordnet sind, das Kraftgerät 36, um einer Auslenkkraft auf das schwenkbasisseitige Ende der Druckfeder 13 entgegenzuwirken. Hierbei ist der Antrieb 30 durch das Einschrauben der Schraubspindel 29 in die Gewindebohrung 33 in Wirkrichtung des Antriebs 30 fest an das schwenkbasisseitige Ende der Druckfeder 13 gekoppelt, während das zweite Kraftgerät 36 aus den Federn 35 und 39 in seiner Funktion in Reihe zwischen den Antrieb 30 und die Schwenkbasis 3 geschaltet ist.

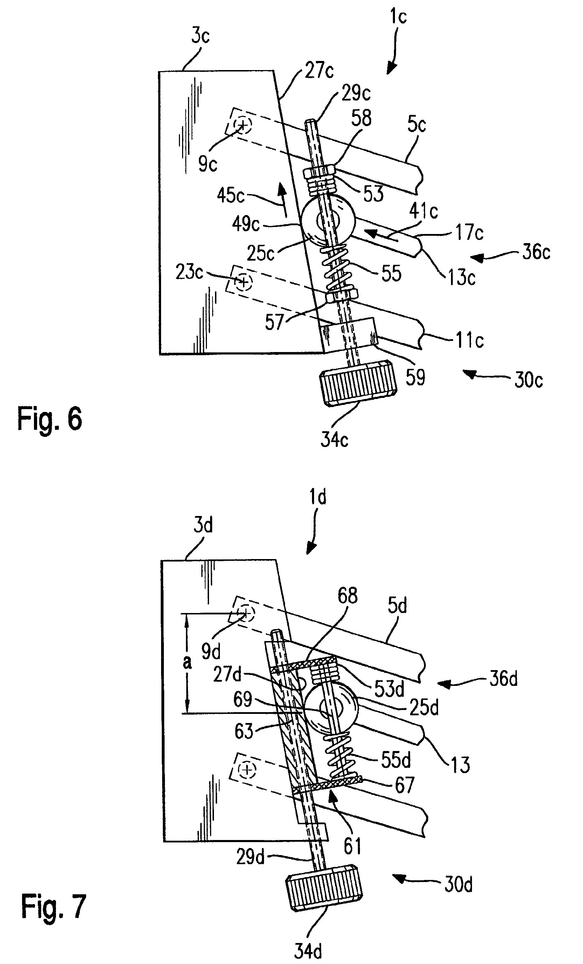

Im Unterschied hierzu weist eine in Figur 6 dargestellte Schwenkhalterungsanordnung 1c eine an einer Schwenkbasis 3c festgelegte Schraubbuchse 59 auf, in welche eine Schraubspindel 29c einschraubbar ist, um diese in deren Längsrichtung an der Schwenkbasis 3c festzulegen. An der Schraubspindel 29c sind ferner zwei mit Abstand voneinander angeordnete Stützringe 57 und 58 festgelegt, zwischen denen zwei Schraubenfedern 53 und 55 angeordnet sind, welche von der Schraubspindel 29c durchsetzt sind. Zwischen den beiden Schraubenfedern 53 und 55 ist eine Rolle 25c angeordnet, welche an Enden der Schraubenfedern 53 und 55 anliegt. Die Rolle 25c ist an einem schwenkbasisseitigen Ende 17c einer Druckfeder 13c drehbar gelagert.

Auch hier stellt sich ein Abstützort 49c, an den die Rolle 25c in Kontakt mit einer an der Schwenkbasis 3c vorgesehenen Stützfläche 27c steht, über ein Kräftegleichgewicht ein, welches sich aus einer Auslenkkraft 45c aufgrund der Druckkraft 41c der Druckfeder 13 und Gegenkräften bildet, welche durch die Schraubenfedern 53 und 55 bereitgestellt werden, wenn sich die Rolle 25c entlang der Stützfläche 27c in einem Bereich zwischen den beiden Stützringen 57 und 58 entlang der Schraubspindel 29c verlagert.

Es bilden hier die Stützringe 57, 58, die Schraubenfedern 53, 55 und die Rolle 25c ein Kraftgerät 36c zur Bereitstellung einer Gegenkraft gegen die Auslenkkraft 45c, während die Schraubspindel 29c die Schraubbuchse 59 und ein Drehgriff 34c einen Antrieb 30c bereitstellen, um den Auslenkbereich des Abstützpunkts 49c entlang der Stützfläche 27c zu verlagern. Es ist dabei das eine Wirkende des Antriebs 30c an der Schwenkbasis 13 über die Schraubbuchse 59 festgelegt, während das andere Wirkende des Antriebs 30c unter Zwischenschaltung des Kraftgeräts 36c an das schwenkbasisseitige Wirkende 17c der Druckfeder 13c gekoppelt ist.

Eine in Figur 7 dargestellte Schwenkhalterungsanordnung 1d weist einen ähnlichen Aufbau auf wie die in Figur 6 dargestellte Schwenkhalterungsanordnung, indem auch hier eine Rolle 25d in Kontakt mit Federn 53d und 55d steht, um eine einer Auslenkkraft entgegengerichtete Gegenkraft bereitzustellen. Allerdings ist bei der Schwenkhalterungsanordnung 1d eine Stützfläche 27d, an der die Rolle 25d abrollt, nicht unmittelbar an einer Schwenkbasis 3d vorgesehen, sondern an einem Schlitten 61 bereitgestellt, welcher bezüglich der Schwenkbasis 3d in einer Richtung quer zur Horizontalen verlagerbar ist. Die Verlagerung des Schlittens 61 bezüglich der Schwenkbasis 3d erfolgt über einen Antrieb 30d aus einer Gewindespindel 29d, welche an der Schwenkbasis 3d drehbar gelagert und über einen Drehgriff 34d betätigbar ist. Der Schlitten 61 weist eine von der Gewindespindel 29d durchsetzte Gewindebohrung 63 auf, so daß durch Drehen der Gewindespindel 29d der Schlitten 61 in Richtung der Gewindespindel 29d bezüglich der Schwenkbasis 3d verlagerbar ist und dadurch der Abstand a zwischen einer Schwenkachse 9d des Schwenkarms 5d und einem Abstützort der Rolle 25d an der Stützfläche 27d änderbar ist, um die Größe des von der Schwenkhalterungsanordnung erzeugten Gegendrehmoments auf die zu halternde Last abzustimmen.

Auf das schwenkbasisseitige Ende 17d der Schwenkhalterungsanordnung 1d wirken ferner noch die Kräfte eines zweiten Kraftgeräts 36d, welches an dem Schlitten 61 gehaltert ist. Dieses zweite Kraftgerät 36d umfaßt mit Abstand voneinander an dem Schlitten angeordnete Wangen 67 und 68, welche einen zwischen den Wangen 67, 68 angeordneten Stift 69 tragen, der sich in einer Vertikalebene und parallel zu der Stützfläche 27d erstreckt. Der Stift 69 durchsetzt Schraubenfedern 53d und 55d, zwischen deren aufeinander zu weisenden Stirnenden die Rolle 25d angeordnet ist. Die Funktion der Schraubenfedern 53d und 55d entspricht der Funktion der Schraubenfedern 53 und 55 der Figur 6.

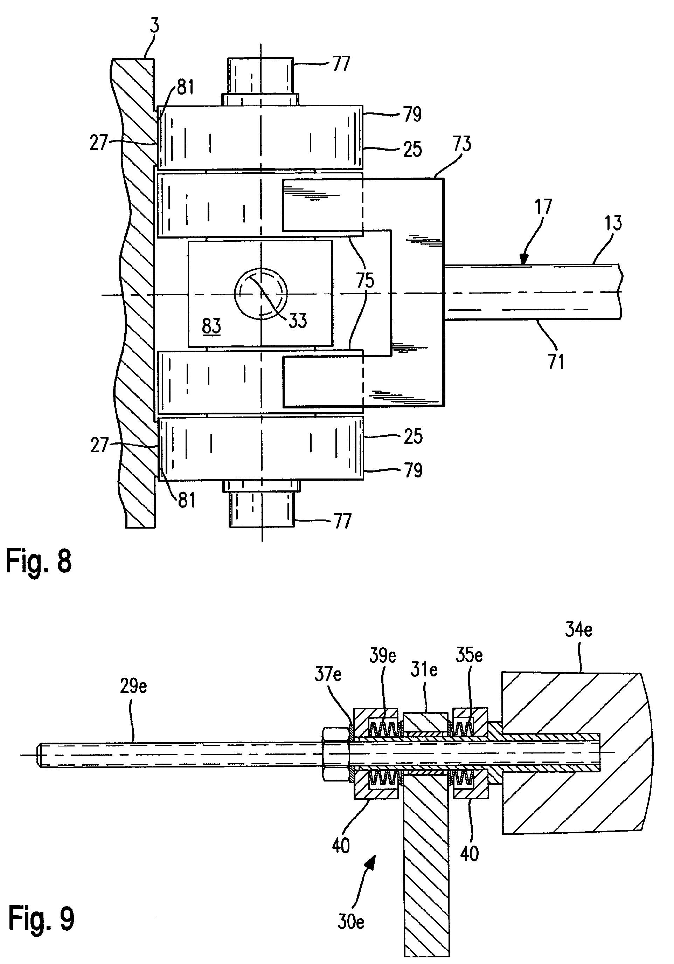

Figur 8 ist eine Teildarstellung des schwenkbasisseitigen Endes 17 und dessen Anlage an der Schwenkbasis 3 der in den Figuren 2 und 3 dargestellten Ausführungsform. Am Ende einer Teleskopstange 71 der Gasdruckfeder 13 ist eine Gabel 73 befestigt, welche an einem Paar mit Abstand voneinander angeordneter, koaxialer Kugellager 75 abgestützt ist. Ein jedes der Kugellager 75 wird von einer Achse 77 durchsetzt, wobei auf jeder Achse 77 benachbart zu dem Kugellager 75 ein weiteres Kugellager 79 gelagert ist, welches die Rolle 25 zum Abstützen des schwenkbasisseitigen Endes 17 der Gasdruckfeder 13 an der Schwenkbasis 3 bildet. An der Schwenkbasis 3 sind zwei Schienen 81 vorgesehen, welche die Stützfläche 27 bilden, an denen die Rolle 25 abrollt. Die Achsen 77 tragen an ihren aufeinander zuweisenden Stirnseiten einen Klotz 83, welcher die Gewindebohrung 33 aufweist, die von der Gewindestange 29 durchsetzt ist.

Figur 9 zeigt eine Variante des in den Figuren 2 und 3 dargestellten Kraftgeräts. Das in Figur 9 dargestellte Kraftgerät weist ebenfalls eine Gewindestange 29e mit einem daran befestigten Drehgriff 34e auf, wobei die Gewindestange 29e eine Verschiebebuchse 31e durchsetzt, welche an der Schwenkbasis festgelegt ist. Zwischen der Verschiebebuchse 31e und dem Drehgriff 34e ist eine Tellerfederpackung 35e angeordnet, während zwischen der Verschiebebuchse 31e und einem an der Gewindespindel 29e festgelegten Stützring 37e eine weitere Tellerfederpackung 39e angeordnet ist. Die Federpackungen 35e und 39e sind hierbei innerhalb von Ringhauben 40 angeordnet, welche die Federpackungen zum einen schützend umgreifen und zum anderen als Endanschläge für die Kompression der Federpackungen 35e, 39e dienen.

Bei den vorangehend beschriebenen Ausführungsformen ist das Kraftgerät zur Erzeugung des Gegendrehmoments als Gasdruckfeder ausgebildet. Allerdings ist hierfür auch jede andere denkbare Form von Druckfedern denkbar, wie beispielsweise eine Schraubendruckfeder oder eine Tellerdruckfeder.

Weiterhin sind in den vorangehend beschriebenen Ausführungsformen die Federn des Kraftgeräts zur Bereitstellung der Gegenkraft zu der Auslenkkraft zur Verlagerung des Abstützorts entlang der Stützfläche als Schraubenfedern ausgebildet. Auch hier sind andere Federarten denkbar, wie beispielsweise Tellerfedern, Zugfedern oder Druckfedern. Die Bereitstellung der Gegenkraft kann ferner auch mittels Körpern aus einem elastischen Material, wie etwa Gummiblöcken, erfolgen, welche in das zweite Kraftgerät eingesetzt sind.

Bei den vorangehend beschriebenen Ausführungsformen stützt sich das erste Kraftgerät unter Zwischenschaltung einer Rolle an der Stützfläche ab. Es ist allerdings auch möglich, nicht unter Zwischenschaltung einer Rolle, sondern eines Gleitsteins o.ä. die Abstützung des schwenkbasisseitigen Endes des ersten Kraftgeräts an der Stützfläche der Schwenkbasis zu erreichen. Hierbei können dann geeignete Maßnahmen zur Verminderung der Gleitreibung getroffen werden.

## Patentansprüche

1. Schwenkhalterungsanordnung mit einem an einer Schwenkbasis (3) um eine Horizontalachse (9) schwenkbar angelenkten Schwenkarm (5) zur höhenveränderbaren Halterung einer Last und einem ersten Kraftgerät (13), welches mit einem ersten seiner beiden Wirkenden an dem Schwenkarm (5) mit Abstand von der Horizontalachse (9) angelenkt ist und welches mit einem zweiten (17) seiner beiden Wirkenden an der Schwenkbasis (3) an einem mit Abstand (a) in Vertikalrichtung von der Horizontalachse (9) angeordneten Abstützort (49) abgestützt ist, um ein Gegendrehmoment zur wenigstens teilweisen Kompensation eines durch die Last auf den Schwenkarm (5) ausgeübten Drehmoments bereitzustellen,
wobei an der Schwenkbasis (3) eine quer zur Horizontalrichtung sich erstreckende Stützfläche (27) vorgesehen ist, welche einen Verlagerungsbereich aufweist, innerhalb dessen der Abstützort (49) entlang der Stützfläche (27) kontinuierlich verlagerbar ist, um eine schwenkstellungsunabhängige Kompensation der Gewichtskraft der Last zu ermöglichen,
wobei die Stützfläche (27) in dem Verlagerungsbereich derart orientiert ist, daß bei in dem Verlagerungsbereich angeordnetem Abstützort (49) und bei nach oben geschwenktem Schwenkarm (5) auf das an der Schwenkbasis (3) angelenkte Wirkende (17) des ersten Kraftgeräts (13) eine nach unten gerichtete Auslenkkraft (45) zur Verlagerung des Abstützortes (49) wirkt, und bei nach unten geschwenktem Schwenkarm (5) auf das an der Schwenkbasis (3) angelenkte Wirkende (17) des Kraftgeräts (13) eine nach oben gerichtete Auslenkkraft (45) zur Verlagerung des Abstützortes (49) wirkt,
**dadurch gekennzeichnet, daß**
ein zweites Kraftgerät (36) vorgesehen ist, um auf das an der Schwenkbasis (3) angelenkte Ende (17) des ersten Kraftgeräts (13) bei in wenigstens einem Teilbereich des Verlagerungsbereichs angeordnetem Abstützort (49) eine der nach unten oder/und der nach oben gerichteten Auslenkkraft (45) entgegengerichtete Gegenkraft auszuüben.

2. Schwenkhalterungsanordnung nach Anspruch 1, wobei das zweite Kraftgerät (36) ein doppelt wirkendes Kraftgerät ist, welches auf das an der Schwenkbasis angelenkte Ende des ersten Kraftgeräts bei einer Auslenkung aus einem Zentrum des Verlagerungsbereichs desselben eine zu dem Zentrum hin gerichtete Gegenkraft ausübt.

3. Schwenkhalterungsanordnung nach Anspruch 1 oder 2, wobei das zweite Kraftgerät (36) wenigstens eine Druckfeder (35, 39; 53, 55) oder/und eine Zugfeder umfasst.

4. Schwenkhalterungsanordnung nach einem der Ansprüche 1 bis 3, wobei ein den Verlagerungsbereich selbst in Vertikalrichtung verlagernder Antrieb (30) zur einstellbaren Änderung des Gegendrehmoments vorgesehen ist.

5. Schwenkhalterungsanordnung nach Anspruch 4, wobei das Gegendrehmoment in einem vorbestimmten Bereich änderbar ist und wobei durch das erste Kraftgerät (13) und das zweite Kraftgerät (36) bereitgestellte Kräfte derart aufeinander abgestimmt sind, dass die Auslenkkraft (45) zur Verlagerung des Abstützortes (49) bei einem kleinen Gegendrehmoment kleiner ist die maximale Gegenkraft des zweiten Kraftgeräts.

6. Schwenkhalterungsanordnung nach Anspruch 4 oder 5, wobei ein Paar von Endanschlägen (33, 37; 57, 59) vorgesehen ist, um den Verlagerungsbereich als Teilbereich der Stützfläche (27, 27c) zu begrenzen, und wobei das Paar von Endanschlägen (33, 37; 57, 59) durch den Antrieb in Vertikalrichtung verlagerbar ist.

7. Schwenkhalterungsanordnung nach einem der Ansprüche 4 bis 6, wobei der Antrieb (30) mit einem seiner beiden Wirkenden an das an der Schwenkbasis (3) abgestützte Ende (17) des ersten Kraftgeräts gekoppelt ist und mit seinem anderen Wirkende unter Zwischenschaltung des zweiten Kraftgeräts (36) an der Schwenkbasis (3) angelenkt ist.

8. Schwenkhalterungsanordnung nach einem der Ansprüche 4 bis 6, wobei der Antrieb (30c; 30d) mit einem seiner beiden Wirkenden an der Schwenkbasis (3c; 3d) angelenkt ist und mit seinem anderen Wirkende unter Zwischenschaltung des zweiten Kraftgeräts (36c; 36d) an das an der Schwenkbasis (3c; 3d) abgestützte Ende des ersten Kraftgeräts gekoppelt ist.

9. Schwenkhalterungsanordnung nach einem der Ansprüche 6 bis 8, wobei wenigstens einer der beiden Endanschläge durch eine Druckfeder (35, 39; 53, 55) des zweiten Kraftgeräts (36) bereitgestellt ist.

10. Schwenkhalterungsanordnung nach einem der Ansprüche 4 bis 9, wobei der Antrieb ein Spindelantrieb ist, dessen Spindel (29) Schraubenfedern (35, 39; 53, 55) des zweiten Kraftgeräts (36) in deren Längsrichtung durchsetzt.

11. Schwenkhalterungsanordnung nach Anspruch 4, wobei die Stützfläche (27d) an einem durch den Antrieb (30d) in Vertikalrichtung verlagerbaren Schlitten (61) bereitgestellt ist.

12. Schwenkhalterungsanordnung nach einem der Ansprüche 1 bis 11, wobei die Stützfläche (27) sich bereichsweise orthogonal zu einer Erstreckungsrichtung des Schwenkarms (5) erstreckt, wenn dieser aus einer Horizontalrichtung teilweise nach oben geschwenkt ist.

## Claims

1. Pivot supporting assembly comprising a pivot arm (5) for supporting a load in a vertically adjustable manner, said pivot arm being hinged to a pivot base (3) to be pivotable about a horizontal axis (9), and a first force-providing device (13) which is hinged with a first one of its two operative ends to the pivot arm (5) spaced apart from the horizontal axis (9) and which is supported with a second one (17) of its two operative ends on the pivot base (3) at a support location (49) which is vertically spaced apart from the horizontal axis (9) by a distance (a) for providing a countertorque to at least partially compensate for a torque imparted by the load on the pivot arm (5),
wherein the pivot base (3) is provided with a support surface (27) which extends transverse to the horizontal direction and has a shift area in which the support location (49) is continuously shiftable along the support surface (27) to enable a compensation of the weight of the load independent of the pivotal position,
wherein the support surface (27) is oriented in the shift area such that, when the support location (49) is disposed in the shift area and the pivot arm (5) is raised, a downwardly directed displacement force (45) acts on the operative end (17) of the first force-providing device (13) hinged to the pivot base (3) for shifting the support location (49), and, when the pivot arm (5) is lowered, an upwardly directed displacement force (45) acts on the operative end (17) of the force-providing device (13) hinged to the pivot base (3) for shifting the support location (49),
**characterized in that**
a second force-providing device (36) is provided for generating a counterforce to the downwardly or/and upwardly directed displacement force (45), said counterforce acting on the end (17) of the first force-providing device (13) hinged to the pivot base (3), when the support location (49) is disposed in at least a partial area of the shift area.

2. Pivot supporting assembly according to claim 1,
wherein the second force-providing device (36) is a double-acting force-providing device which provides a counterforce acting on the end of the first force-providing device hinged to the pivot base when the same is displaced from a center of the shift area thereof, said counterforce being directed towards said center.

3. Pivot supporting assembly according to claim 1 or 2,
wherein the second force-providing device (36) comprises at least one compression spring (35, 39; 53, 55) or/and a tension spring.

4. Pivot supporting assembly according to one of claims 1 to 3, wherein a drive (30) is provided for shifting the shift area as such in vertical direction and for adjustably varying the countertorque.

5. Pivot supporting assembly according to claim 4,
wherein the countertorque is variable in a predetermined range and wherein forces provided by the first force-providing device (13) and the second force-providing device (36) are adjusted to each other such that, with a small countertorque, the displacement force (45) for shifting the support location (49) is smaller than the maximum counterforce of the second force-providing device.

6. Pivot supporting assembly according to claim 4 or 5,
wherein a pair of end stops (33, 37; 57, 59) is provided for limiting the shift area as partial area of the support surface (27, 27c), and wherein the pair of end stops (33, 37; 57, 59) is vertically movable by the drive.

7. Pivot supporting assembly according to one of claims 4 to 6, wherein the drive (30) is coupled with one of its operative ends to the end (17) of the first force-providing device which is supported on the pivot base (3) and is hinged with its other operative end to the pivot base (3), with the second force-providing device (36) being interposed.

8. Pivot supporting assembly according to one of claims 4 to 6, wherein the drive (30c; 30d) is hinged with one of its two operative ends to the pivot base (3c; 3d) and is coupled with its other operative end to the end of the first force-providing device which is supported on the pivot base (3c; 3d), with the second force-providing device (36c; 36d) being interposed.

9. Pivot supporting assembly according to one of claims 6 to 8, wherein at least one of the two end stops is provided by a compression spring (35, 39; 53, 55) of the second force-providing device (36).

10. Pivot supporting assembly according to one of claims 4 to 9, wherein the drive is a spindle drive, the spindle (29) of which traverses coil springs (35, 39; 53, 55) of the second force-providing device (36) in longitudinal direction thereof.

11. Pivot supporting assembly according to claim 4,
wherein the support surface (27d) is provided on a carriage (61) which is vertically shiftable by means of the drive (30d).

12. Pivot supporting assembly according to one of claims 1 to 11, wherein the support surface (27) extends partially orthogonal to an extension direction of the pivot arm (5) when the same is partially raised from a horizontal direction.

## Revendications

1. Dispositif de support pivotant comprenant un bras pivotant (5) articulé à pivotement autour d'un axe horizontal (9), sur une embase de pivotement (3), en vue de la retenue d'une charge avec faculté de réglage en hauteur, et un premier appareil (13) générateur de forces qui est articulé sur le bras pivotant (5), par une première de ses deux extrémités opérantes, à distance de l'axe horizontal (9) et qui, par une seconde (17) de ses deux extrémités opérantes, prend appui sur l'embase de pivotement (3) en un point d'appui (49) situé à distance (a) de l'axe horizontal (9), dans le sens vertical, afin de développer un couple de rotation antagoniste pour compenser, au moins partiellement, un couple de rotation imposé au bras pivotant (5) par la charge,
sachant qu'il est prévu, sur l'embase de pivotement (3), une surface d'appui (27) s'étendant transversalement par rapport à la direction horizontale, et munie d'une zone de déport dans les limites de laquelle le point d'appui (49) peut être déplacé continûment le long de ladite surface d'appui (27) pour permettre, indépendamment de la position prise par pivotement, une compensation de la force proportionnelle au poids de la charge,
sachant que, dans la zone de déport, la surface d'appui (27) est orientée de façon telle que, lorsque le point d'appui (49) se trouve dans ladite zone de déport et lorsque le bras pivotant (5) a pivoté vers le haut, une force de déviation (45) dirigée vers le bas soit appliquée, en vue du décalage dudit point d'appui (49), à l'extrémité opérante (17) du premier appareil (13) générateur de forces qui est articulée sur l'embase de pivotement (3) ; et que, lorsque ledit bras pivotant (5) a pivoté vers le bas, une force de déviation (45) dirigée vers le haut soit appliquée, en vue du décalage dudit point d'appui (49), à l'extrémité opérante (17) de l'appareil (13) générateur de forces qui est articulée sur ladite embase de pivotement (3),
**caractérisé par le fait**
**qu'**un second appareil (36) générateur de forces est prévu pour appliquer, à l'extrémité (17) du premier appareil (13) générateur de forces qui est articulée sur l'embase de pivotement (3), lorsque le point d'appui (49) se trouve dans au moins une région partielle de la zone de déport, une force antagoniste orientée en sens inverse de la force de déviation (45) dirigée vers le bas et/ou dirigée vers le haut.

2. Dispositif de support pivotant selon la revendication 1, dans lequel le second appareil (36) générateur de forces est un appareil générateur de forces à double action appliquant, à l'extrémité du premier appareil générateur de forces qui est articulée sur l'embase de pivotement, lors d'une déviation vis-à-vis d'un centre de la zone de déport de ce dernier, une force antagoniste dirigée vers ledit centre.

3. Dispositif de support pivotant selon la revendication 1 ou 2, dans lequel le second appareil, (36) générateur de forces englobe au moins un ressort de pression (35, 39 ; 53, 55) et/ou un ressort de traction.

4. Dispositif de support pivotant selon l'une des revendications 1 à 3, dans lequel un entraînement (30), déplaçant la zone de déport proprement dite dans le sens vertical, est prévu pour la variation réglable du couple de rotation antagoniste.

5. Dispositif de support pivotant selon la revendication 4, dans lequel le couple de rotation antagoniste peut être modifié dans une plage prédéterminée ; et dans lequel des forces, développées par le premier appareil (13) générateur de forces et par le second appareil (36) générateur de forces, sont mutuellement coordonnées de telle sorte que la force de déviation (45) conçue pour décaler le point d'appui (49) soit moindre, en présence d'un faible couple de rotation antagoniste, que la force antagoniste maximale du second appareil générateur de forces.

6. Dispositif de support pivotant selon la revendication 4 ou 5, dans lequel une paire de butées extrêmes (33, 37 ; 57, 59) est prévue pour limiter la zone de déport en tant que région partielle de la surface d'appui (27, 27c) ; et dans lequel ladite paire de butées extrêmes (33, 37 ; 57, 59) peut être déplacée verticalement par l'entraînement.

7. Dispositif de support pivotant selon l'une des revendications 4 à 6, dans lequel l'entraînement (30) est accouplé, par l'une de ses deux extrémités opérantes, à l'extrémité (17) du premier appareil générateur de forces qui prend appui contre l'embase de pivotement (3), et est articulé sur ladite embase de pivotement (3), par son autre extrémité opérante, avec interposition du second appareil (36) générateur de forces.

8. Dispositif de support pivotant selon l'une des revendications 4 à 6, dans lequel l'entraînement (30c ; 30d) est articulé sur l'embase de pivotement (3c ; 3d) par l'une de ses deux extrémités opérantes et est accouplé par son autre extrémité opérante, avec interposition du second appareil (36c ; 36d) générateur de forces, à l'extrémité du premier appareil générateur de forces qui prend appui contre ladite embase de pivotement (3c ; 3d).

9. Dispositif de support pivotant selon l'une des revendications 6 à 8, dans lequel au moins l'une des deux butées extrêmes est procurée par un ressort de pression (35, 39 ; 53, 55) du second appareil (36) générateur de forces.

10. Dispositif de support pivotant selon l'une des revendications 4 à 9, dans lequel l'entraînement est un entraînement par broche dont la broche (29) parcourt des ressorts hélicoïdaux (35, 39 ; 53, 55) du second appareil (36) générateur de forces, dans la direction longitudinale desdits ressorts.

11. Dispositif de support pivotant selon la revendication 4, dans lequel la surface d'appui (27d) est procurée par un chariot (61) pouvant être déplacé verticalement par l'intermédiaire de l'entraînement (30d).

12. Dispositif de support pivotant selon l'une des revendications 1 à 11, dans lequel la surface d'appui (27) s'étend, par zones, orthogonalement vis-à-vis d'une direction d'étendue du bras pivotant (5) lorsque ce dernier est partiellement animé d'un pivotement, vers le haut, à partir d'une direction horizontale.
